Europäisches Patentamt

European Patent Office

Office européen des brevets

(11) Publication number: **0 451 999 A2**

# EUROPEAN PATENT APPLICATION

(21) Application number: 91302745.4

(22) Date of filing: 28.03.91

(51) Int. Cl.⁵: **H04H 7/00**, H04N 5/268

(30) Priority: 28.03.90 JP 80310/90

(43) Date of publication of application:
16.10.91 Bulletin 91/42

(84) Designated Contracting States:
DE FR GB

(71) Applicant: SONY CORPORATION
7-35, Kitashinagawa 6-chome Shinagawa-ku
Tokyo(JP)

(72) Inventor: Mita. Michio
c/o Sony Corporation 7-35 Kitashinagawa
6-chome
Shinagawa-ku Tokyo(JP)
Inventor: Yanagisawa,Junichi
c/o Sony Corporation 7-35 Kitashinagawa
6-chome
Shinagawa-ku Tokyo(JP)

(74) Representative: Nicholls, Michael John et al
J.A. Kemp & Co., 14, South Square, Gray's
Inn
London WC1R 5LX(GB)

(54) Matrix switcher apparatus.

(57) A matrix switcher apparatus provided with a plurality of matrix switcher units each including a plurality of first input terminals, a plurality of second input terminals, a plurality of first output terminals, and a plurality of second output terminals, the plurality of matrix switcher units being arranged in a matrix form, wherein, between the adjacent matrix switcher units, the plurality of first input terminals and the plurality of first output terminals are connected and the plurality of second input terminals and the plurality of second output terminals are connected, thus to constitute a signal switcher of M inputs × N outputs as a whole. Wherein control means for storing identification information to identify the first input terminals and the second output terminals, and for controlling cross points of the matrix switcher units are provided every matrix switcher units, thus to deliver selective instruction signals for signal input and output terminals to the respective control means, whereby the control means control ON/OFF of the cross points on the basis of the selective instruction signals. respectively.

FIG. 3

This invention relates to a matrix switcher apparatus adapted to output, from desired output terminals, input signals delivered through a plurality of input terminals.

In, e.g., television studios or broadcasting stations, so-called a switcher apparatus is used in order to make switching between various such as audio signals or video signals, etc.

For example, in the Japanese Patent Application Laid Open No. 159071/83, there are disclosed a switcher apparatus of a structure such that a first switcher for selecting one video signal from a plurality of input video signals and a second switcher for selecting one video signal from the selected input video signal and a plurality of specific input video signals to output the selected one are cascade-connected, and a switcher apparatus provided with means for switching between the control circuit for the first switcher and the control circuit for the second switcher.

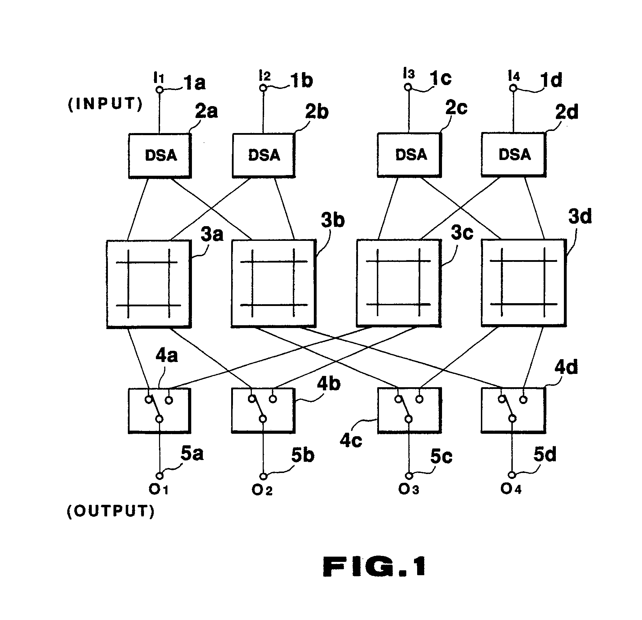

Further, as a switcher apparatus of M × N adapted to carry out switching selection of, e.g., N video signals from M input video signals (hereinafter referred to as a matrix switcher apparatus), a matrix apparatus of a structure, e.g., a shown in FIG. 1 is known. The operation of the matrix switcher apparatus of the structure shown in FIG. 1 will now be briefly described.

Four video signals $I_1$ to $I_4$ respectively delivered through input terminals 1a to 1d are delivered to video distributor amplifiers (hereinafter referred to as DSAs) 2a to 2d. These DSAs 2a to 2d are amplifiers to distribute a video signal into two signals. Video signals $I_1$ and $I_2$ from the DSAs 2a and 2b are delivered to a matrix switcher unit 3a and a matrix switcher unit 3b. Further, video signals $I_3$ and $I_4$ from DSAs 2c and 2d are delivered to a matrix switcher unit 3c and a matrix switcher unit 3d.

The above-mentioned matrix switcher units 3a to 3d are each comprised of, e.g., a matrix switcher unit of 2 × 2. The matrix switcher unit 3a switches between video signals $I_1$ and $I_2$ from DSAs 2a and 2b to deliver a switched one to change-over switches 4a and 4b. The matrix switcher unit 63b switches between video signals $I_1$ and $I_2$ from DSAs 2a and 2b to deliver a switched one to change-over switches 4c and 4d. The matrix switcher unit 3c switches between video signals $I_3$ and $I_4$ from DSAs 2c and 2d to deliver a switched one to the change-over switches 4a and 4b. In addition, the matrix switcher unit 63d switches between video signals $I_3$ and $I_4$ from DSAs 2c and 2d to deliver a switched one to the change-over switches 4c and 4d.

The change-over switch 4a selects one of video signals from the matrix switcher units 3a and 3c to output a selected one to an output terminal 5a as a video signal $O_1$. The change-over switch 4b selects one of video signals from the matrix switcher units 3a and 3c to output a selected one to an output terminal 5b as a video signal $O_2$ The change-over switch 4c selects one of video signals from the matrix switcher units 3b and 3d to output a selected one to an output terminal 5c as a video signal $O_3$. In addition, the change-over switch 4d selects one of video signals from the matrix switcher units 3b and 3d to output a selected one to an output terminal 5d as a video signal $O_4$.

As stated above, video signals arbitrarily selected from four video signals $I_1$ to $I_4$ respectively delivered through input terminals 1a to 1d are outputted to the output terminals 5a to 5d. Since respective video signals $O_1$ to $O_4$ taken out from these output terminals 5a to 5d go by way of DSAs 2 having the same delay characteristics, respectively, matrix switcher units 3 having the same delay characteristics, respectively, and change-over switches 4 having the same delay characteristics, respectively, delay times of respective video signals $O_1$ to $O_4$ are the same even if they pass through any path (route), resulting in the fact that phases of respective output video signals $O_1$ signals $O_4$ are the same.

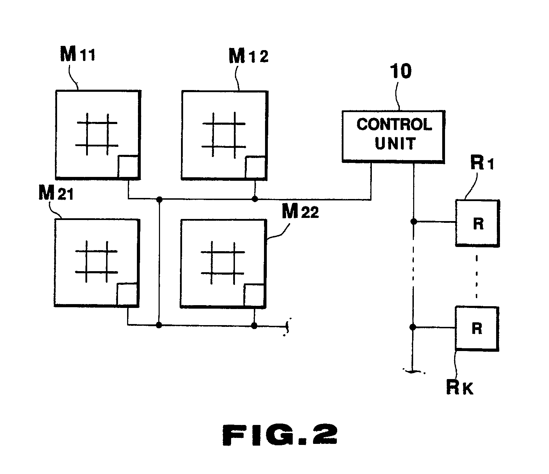

Meanwhile, when a plurality of matrix switcher units each comprised of, e.g., a small scale (4 × 4) matrix switcher apparatus of the structure as described above are conventionally used to constitute a signal large scale matrix switcher apparatus, control of this large scale matrix switcher apparatus was conducted in a manner as shown in FIG. 2.

In FIG. 2, matrix switcher units $M_{11}$ to $M_{22}$ are each comprised of, e.g., a small scale matrix switcher unit as described above. The control unit 50 was operative to receive a switching request signal from so-called remote controls $R_1$ to $R_k$ to control, in a centralized manner, respective matrix switcher units $M_{11}$ to $M_{22}$ by using a control program stored in the control unit 10.

Meanwhile, as described above, in the case of the arrangement using the control unit 10 of the centralized control type, control programs for exclusive use are required every scales of the matrix switcher apparatuses. Thus, development of control programs in conformity with scales of matrix switcher apparatuses was required. Further, in the case of installing more matrix switcher units in the matrix switcher apparatus of the structure as shown in FIG. 2, for example, it was necessary to change the control program stored in the control unit 10 so that it is adapted to the system after more unit are installed.

With such actual circumstances in view, this invention has been made, and its object is to provide a matrix switcher apparatus which can constitute small scale to large scale matrix switcher apparatuses by using the same matrix switcher unit without necessitating the control unit 10 for concentrically control respective matrix switcher units $M_{11}$ to $M_{22}$ as described above, and which can install more matrix switcher units with ease, thus permitting the number of input/output signals to be easily increased.

In the matrix switcher apparatus according to this invention, there are provided a plurality of matrix switcher units each including a plurality of first input terminals, a plurality of second input terminals, a plurality of first output terminals, and a plurality of second output terminals. Such a plurality of matrix switcher units are arranged in a matrix form. Between adjacent matrix switcher units, a plurality of first input terminals and a plurality of first output terminals are connected, and a plurality second input terminals and a plurality of second output terminals are connected. Further, control means for storing ID information to identify first input terminals and second output terminals, and for controlling cross points of the matrix switcher units are provided every matrix switcher units to deliver selective instruction signals for signal input and output terminals to respective control means to control ON/OFF of cross points on the basis of selective instruction signals in respective control means, thereby making it possible to constitute a matrix switcher apparatus of M inputs × N outputs as a whole, thus to carry out switching selection of a plurality of input signals to output selected ones to desired output terminals.

Further, control circuits are respectively provided in the matrix switcher units to carry out distributed processing, thereby making it possible to constitute small scale to large scale matrix switcher apparatuses by using the same matrix switcher units. Thus, it becomes unnecessary to carry out design of a matrix switcher apparatus in conformity with a scale that user desires and development of the control program dedicated therefor, thus making it possible to reduce the development cost. Further, user can purchase a matrix switcher apparatus of a desired scale at the minimum cost.

Further, an approach is employed to additionally provide a matrix switcher unit in the matrix switcher apparatus once installed, thereby making it possible to increase the number of input/output signals with ease without such a troublesomeness to change the control program of a centerized control unit as encountered with conventional matrix switcher apparatus. In addition, wiring in this enlargement may be attained by directly connecting matrix switcher units. Thus, enlargement can be carried out with ease.

The invention will be further described by way of non-limitative example with reference to the accompanying drawings in which:-

FIG. 1 is a block diagram showing the arrangement of a conventional matrix switcher apparatus.

FIG. 2 is a block diagram showing the arrangement of a conventional matrix switcher apparatus constituted with a plurality of matrix switcher units.

FIG. 3 is a block diagram showing an example of the arrangement of a matrix switcher apparatus according to this invention.

FIG. 4 is a flowchart for explaining the operation of the matrix switcher apparatus.

An embodiment of a matrix switcher apparatus according to this invention will now be described with reference to the attached drawings.

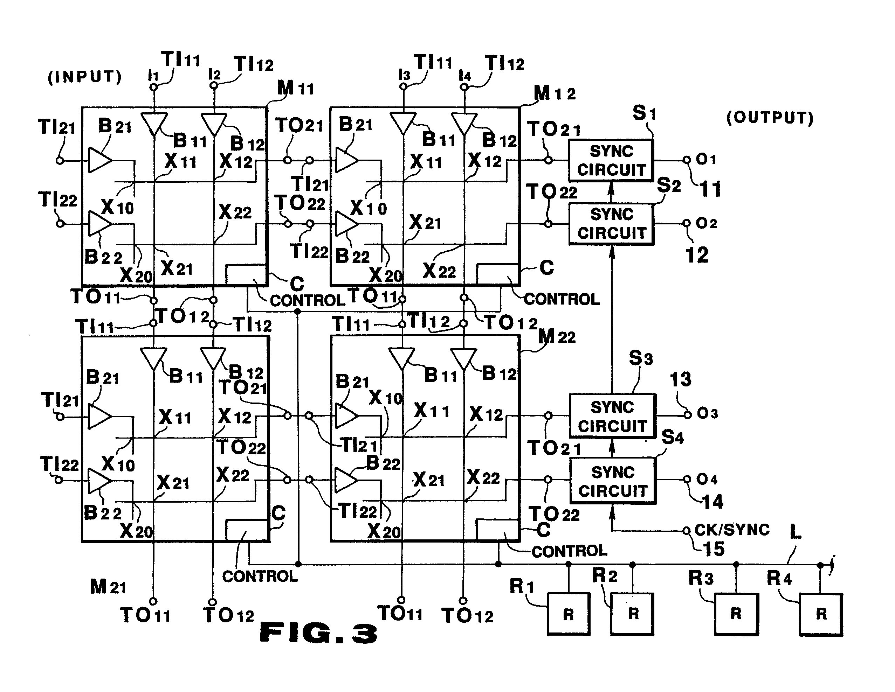

As shown in FIG. 3, a matrix switcher apparatus of, e.g., 4 inputs × 4 outputs (hereinafter referred to as 4 × 4) is of a structure such that four matrix switcher units $M_{11}$ to $M_{22}$ of 2 × 2 are arranged in a matrix form (lengthwise and breadthwise).

In actual sense, the above-mentioned respective matrix switcher units $M_{11}$ to $M_{22}$ have the same circuit configuration, i.e., include two first input terminals $TI_{11}$ and $TI_{12}$, two second input terminals $TI_{21}$ and $TI_{22}$, two first output terminals $TO_{11}$ and $TO_{12}$, and two second output terminals $TO_{21}$ and $TO_{22}$, respectively. Further, the above-mentioned first input terminals $TI_{11}$ and $TI_{12}$ are connected to the input terminals of buffers $B_{11}$ and $B_{12}$, respectively, and the output terminals of the buffers $B_{11}$ and $B_{12}$ are connected to the first output terminals $TO_{11}$ and $TO_{12}$, respectively. Furthermore, the second input terminals $TI_{21}$ and $TI_{22}$ are connected to the input terminals of buffers $B_{21}$ and $B_{22}$, respectively, and the output terminals of the buffers $B_{21}$ and $B_{22}$ are connected to switches $X_{10}$ and $X_{20}$ expressed by intersections of signal lines, so-called cross points, respectively. Outputs from the switches $X_{10}$ and $X_{20}$ are taken out from the second output terminals $TO_{21}$ and $TO_{22}$, respectively. In addition, as shown in FIG. 1, respective cross points of signal lines in the matrix switcher units $M_{11}$ to $M_{22}$ represent switches $X_{11}$, $X_{12}$, $X_{21}$ and $X_{22}$. These switches $X_{11}$ to $X_{22}$ serve to carry out switching to allow signal lines in a longitudinal direction and signal lines in a lateral direction within the matrix switcher units to be placed in a connected (ON) state or a cut off (OFF) state.

Namely, the above-mentioned matrix switcher units $M_{11}$ to $M_{22}$ carry out switching selection of four input signals in total respectively delivered through the first input terminals $TI_{11}$ and $TI_{12}$ and the second input terminals $TI_{21}$ and $TI_{22}$ to arbitrarily output selected ones to the respective second output terminals $TO_{21}$ and $TO_{22}$, and to output two input signals delivered through the first input terminals $TI_{11}$ and $TO_{12}$ to the first output terminals

$TO_{11}$ and $TO_{12}$, respectively. In other words, the matrix switcher units $M_{11}$ to $M_{22}$ output, from desired output terminals $TO_{21}$ and $TO_{22}$, four input signals respectively delivered through the input terminals $TI_{11}$, $TI_{12}$, $TI_{21}$ and $TI_{22}$, and output two input signals delivered through the first input terminals $TO_{11}$ and $TI_{12}$ to the first output terminals $TO_{11}$ and $TO_{12}$, respectively.

The matrix switcher units $M_{11}$ to $M_{22}$ constructed as described above are arranged in a matrix form as shown in FIG. 3. Between adjacent matrix switcher units, the first output terminals $TO_{11}$ and $TO_{12}$ of a matrix switcher unit and the first input terminals $TI_{11}$ and $TI_{12}$ of the adjacent matrix switcher unit are connected, respectively, and the second output terminals $TO_{21}$ and $TO_{22}$ and the second input terminals $TI_{21}$ and $TI_{22}$ of the adjacent matrix switcher unit are connected, respectively. Thus, a matrix switcher apparatus of 4 × 4 is constituted. As a result, as shown in FIG. 3, it is possible to arbitrarily carry out switching selection of four input signals $I_1$ to $I_4$ respectively delivered through the input terminals $TI_{11}$ and $TI_{12}$ of the matrix switcher units $M_{11}$ and $M_{12}$ to output selected ones to the respective output terminals $TO_{21}$ and $TO_{22}$ of the matrix switcher units $M_{12}$ and $M_{22}$. Further, since the matrix switcher apparatus constructed above includes the second input terminals $TI_{21}$ and $TI_{22}$ capable of cascade-connecting a new matrix switcher unit at the matrix switcher units $M_{11}$ and $M_{21}$, respectively, and includes the first output terminals $TO_{11}$ and $TO_{12}$ at the matrix switcher units $M_{21}$ and $M_{22}$, respectively, it is possible to install more matrix switcher units with ease.

The second output terminals $TO_{21}$ and $TO_{22}$ of the matrix switcher units $M_{12}$ and $M_{22}$ are connected to synchronization (SYNC) circuit $S_1$ to $S_4$, respectively. These SYNC circuit $S_1$ to $S_4$ are circuits for providing synchronization of so-called subframe, frame, and block, etc. of an input signals, e.g., a digital video signal. These circuits serve to allow phases and various synchronizations of, e.g., respective digital video signals delivered through the output terminals $TO_{21}$ and $TO_{22}$ of the matrix switcher units $M_{12}$ and $M_{22}$ to be in correspondence with each other by using, e.g., a clock signal CK, and various synchronization signals SYNC delivered through the terminals 15 to output, as output signals $O_1$ to $O_4$, through output terminals 11 to 14, digital video signals of which phases and various synchronizations are in correspondence with each other. It is to be noted that an input signal that the matrix switcher apparatus carries out switching is not limited to the digital video signal mentioned above, but may be a digital signal such as a digital audio signal.

Meanwhile, the matrix switcher units $M_{11}$ to $M_{22}$ include control circuits C for controlling the switches $X_{10}$, $X_{11}$, $X_{12}$, $X_{20}$, $X_{21}$, and $X_{22}$ in the matrix switcher units $M_{11}$ to $M_{22}$, respectively. Respective control circuits C of the matrix switcher units $M_{11}$ to $M_{22}$ are connected by way of a single control line L. To the control line L, so-called remote controls $R_1$ to $R_4$ for carrying out remote are connected.

Into respective control circuit C of the matrix switcher units $M_{11}$ to $M_{22}$, identification information (hereinafter referred to as ID) for identifying input signals delivered to the respective matrix switcher units $M_{11}$ to $M_{22}$ and output signals that the respective matrix switcher units $M_{11}$ to $M_{22}$ output are stored. For example, as shown in FIG. 1, input signals $I_1$ and $I_2$ are delivered to the matrix switcher unit $M_{11}$, and the matrix switcher unit $M_{11}$ outputs each of output signals $O_1$ and $O_2$ through the matrix switcher unit $M_{12}$ and the SYNC circuits $S_1$ and $S_2$. Accordingly, ID ($I_1$, $I_2$ : $O_1$, $O_2$) is allotted as ID of the matrix switcher unit $M_{11}$. In a manner similar to the above, ID ($I_3$, $I_4$ : $O_1$, $O_2$) are allotted to the matrix switcher unit $M_{12}$, ID ($I_1$, $I_2$ : $O_3$, $O_4$) is allotted to the matrix switcher unit $M_{21}$, and ID ($I_3$, $I_4$ : $O_3$, $O_4$) is allotted to the matrix switcher unit $M_{22}$. Further, the above-mentioned remote controls $R_1$ to $R_4$ correspond to output terminals 11 to 14, respectively. For example, the remote control $R_1$ serves to carry out selective control of input signals $I_1$ to $I_4$ outputted as an output signal $O_1$ from the output terminal I.

Thus, in this embodiment, there are provided four matrix switcher units $M_{11}$ to $M_{22}$ each including two first input terminals $TI_{11}$ and $TI_{12}$, two second input terminals $TI_{21}$ and $TI_{22}$, two first output terminals $TO_{11}$ and $TO_{12}$, and two second output terminals $TO_{21}$ and $TO_{22}$. These matrix switcher units $M_{11}$ to $M_{22}$ are arranged in a matrix form. Between adjacent matrix switcher units, two first input terminals $TI_{11}$ and $TI_{12}$ and two first output terminals $TO_{11}$ and $TO_{12}$ are connected, and two second input terminals $TI_{21}$ AND $TI_{22}$ and two second output terminals $TO_{21}$ and $TO_{22}$ are connected to thereby constitute a matrix switcher apparatus of 4 × 4 as a whole. The control circuits C provided every matrix switcher units $M_{11}$ to $M_{22}$ are used as control means for storing identification information for identifying the first terminals $TI_{11}$ and $TI_{12}$ and the second output terminals $TO_{21}$ and $TO_{22}$, and for controlling ON/OFF of cross points of the matrix switcher units, i.e., switches $X_{10}$, $X_{11}$, $X_{12}$, $X_{20}$, $X_{21}$, and $X_{22}$.

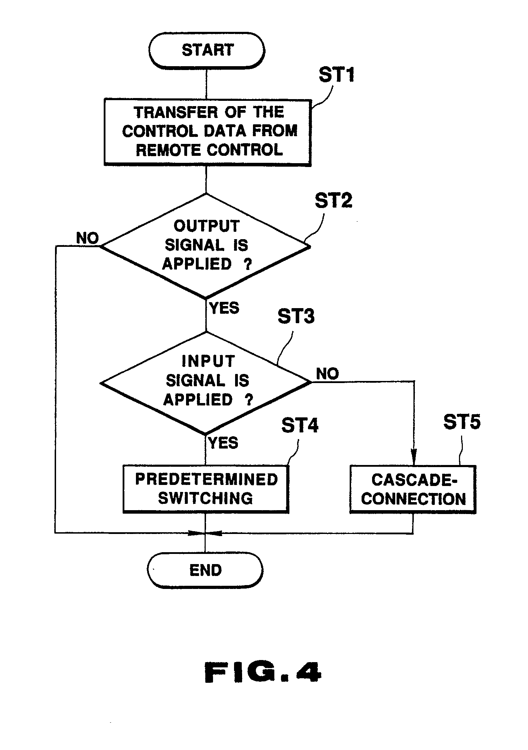

The operation of the matrix switcher apparatus constituted as described above will now be described by using the flowchart shown in FIG. 4.

At step ST1 of the flowchart shown in FIG. 2, by means of remote controls $R_1$ to $R_4$, control data for making an instruction to carry out switching selection of input signals $I_1$ to $I_4$ to output selected ones to corresponding ones of output terminals 11 to 14 is transferred to each of control circuit C of the matrix switcher units $M_{11}$ to $M_{22}$. For example, in the case where remote control $R_1$ is used to output, from the output terminal 11, an input signal $I_1$ delivered through the input terminal $TI_{11}$ of the matrix switcher unit $M_{11}$, control data to output the input signal $I_1$ as the output signal $O_1$ to the output terminal 11 (hereinafter represented as $[I_1 \rightarrow O_1]$) is transferred to each of control circuits C of the matrix switcher units $M_{11}$ to $M_{22}$ by means of the remote control $R_1$.

At step ST2, each of the control circuits C of the matrix switcher units $M_{11}$ to $M_{22}$ makes comparison between the above-mentioned allotted IDs and the received control data to judge whether or not an output signal instructed by the control data corresponds to output signals subjected to switching by each of the matrix switcher units $M_{11}$ to $M_{22}$ and outputted therefrom to proceed to step ST3 when the former corresponds to the latter, and to end the operation while maintaining the present state. For example, in the case of outputting, e.g., the input signal $I_1$ from the output terminal 11, each of the control circuits C of the matrix switcher units $M_{11}$ to $M_{22}$ makes comparison between the ID and the control data $[I_1 \rightarrow O_1]$. Then, each of the control circuits C of the matrix switcher units $M_{11}$ and $M_{12}$ to which the output signal $O_1$ is allotted judge that there is correspondence to proceed to step ST3. On the other hand, each of the control circuits C of other matrix switcher units $M_{21}$ and $M_{22}$ judges that there is no correspondence to end the operation while maintaining the present state.

At the step ST3, each of the control circuits C of the matrix switcher units $M_{11}$ to $M_{22}$ makes comparison between the ID and the control data to judge whether or not an input signal instructed by control data corresponds to an input signal delivered to each of the matrix switcher units $M_{11}$ to $M_{22}$ to proceed to step ST4 when the former corresponds to the latter, and to proceed to step ST5 when the former does not correspond to the latter. For example, in the case of outputting the input signal $I_1$ from the output terminal 11, each of the control circuits C of the matrix switcher units $M_{11}$ and $M_{12}$ makes comparison between the ID and the control data $[I_1 \rightarrow O_1]$. The control circuit C of the matrix switcher unit $M_{11}$ to which the input signal $I_1$ is allotted judges that there is correspondence to proceed to the step ST4. On the other hand, the control circuit C of the matrix switcher unit $M_{12}$ judges that there is no correspondence to proceed to the step ST5.

At the step ST4, respective control circuits C of the matrix switcher units $M_{11}$ to $M_{22}$ control the switches $X_{11}$ to $X_{22}$ on the basis of the control data. For example, in the case of outputting, e.g., the input signal $I_1$ from the output terminal 11, the control circuit C of the matrix switcher unit $M_{11}$ controls the switch $X_{11}$ of the matrix switcher unit $M_{11}$ shown in FIG. 3 so that it is in an ON state to end the operation.

At the step ST5, respective control circuits C of the matrix switcher units $M_{11}$ to $M_{22}$ control the switches $X_{10}$ and $X_{20}$ for cascade-connecting matrix switcher units. For example, in the case of outputting the input signal $I_1$ from the output terminal 11, the control circuit C of the matrix switcher unit $M_{12}$ controls the switch $X_{10}$ of the matrix switcher unit $M_{12}$ shown in FIG. 3 for cascade-connecting matrix switcher units so that it is in an ON state to end the operation.

As a result, as shown in FIG. 3, an input signal $I_1$ delivered through the input terminal $TI_{11}$ of the matrix switcher unit $M_{11}$ is delivered to the SYNC circuit $S_1$ through the switch $X_{11}$ of the matrix switcher unit $M_{11}$ and the switch $X_{10}$ of the matrix switcher unit $M_{12}$, and is subjected to synchronization. Thereafter, that input signal is outputted from the output terminal 11 as an output signal $O_1$.

Further, e.g., in the case of outputting, as an output signal $O_1$, from the output terminal 11, an input signal $I_2$ delivered through the input terminal $TI_{12}$ of the matrix switcher unit $M_{11}$, control data $[I_2 \rightarrow O_1]$ is transferred to each of the control circuits C of the matrix switcher units $M_{11}$ to $M_{22}$ by means of the remote control $R_1$.

At the step ST4, the control circuit C of the matrix switcher unit $M_{11}$ controls the switch $X_{11}$ in the matrix switcher unit $M_{11}$ so that it is an OFF state, and to control the switch $X_{12}$ so that it is an ON state.

At the step ST5, the control circuit C of the matrix switcher unit $M_{12}$ controls the switch $X_{10}$ in the matrix switcher unit $M_{12}$ so that it is in an ON state for a second time, i.e., maintains the present state. It is to be noted that, at the step ST2, respective control circuits of the matrix switcher units $M_{21}$ and $M_{22}$ effects a control to maintain the present state because they have no corresponding output signal.

Similarly, an approach may be employed to use remote controls $R_2$ to $R_4$ corresponding to respective output terminals 2 to 4 to control respective matrix switcher units $M_{11}$ to $M_{22}$ through a single control line L, thereby making it possible to arbitrarily select input signals $I_1$ to $I_4$ to output selected ones from respective output terminals 12 to 14.

Meanwhile, in the above-described embodiment, remote controls $R_1$ to $R_4$ correspond to output terminals 11 to 14, respectively. For example, when an arrangement may be employed in which respective control circuits C of the matrix

switcher units $M_{11}$ to $M_{22}$ preferentially handle the latest receive control data, an output signal $O_1$ outputted from the output terminal 11 may be controlled from other remote controls $R_2$ and $R_3$.

As described above, there are provided four matrix switcher units $M_{11}$ to $M_{22}$ each including two first input terminals $TI_{11}$ and $TI_{12}$, two second input terminals $TI_{21}$ and $TI_{22}$, two first output terminals $TO_{11}$ and $TO_{12}$, and two second output terminals $TO_{21}$ and $TO_{22}$. These matrix switcher units $M_{11}$ to $M_{22}$ are arranged in a matrix form. Between adjacent matrix switcher units, first input terminals $TI_{11}$ and $TI_{12}$ and first output terminals $TO_{11}$ and $TO_{12}$ are connected, and second input terminals $TI_{21}$ and $TI_{22}$ and second output terminals $TO_{21}$ and $TO_{22}$ are connected. Further, control circuits C for storing ID information to identify first input terminals $TI_{11}$ and $TI_{12}$ and second output terminals $TO_{21}$ and $TO_{22}$, and for controlling cross points $X_{10}$, $X_{11}$, $X_{12}$, $X_{20}$, $X_{21}$ and $X_{22}$ of the matrix switcher units are provided every matrix switcher units $M_{11}$ to $M_{22}$ to deliver selective instruction signals for signal input and output terminals to respective control circuits C to control individually, i.e., in a distributed manner, ON/OFF of cross points $X_{10}$, $X_{11}$, $X_{12}$, $X_{20}$, $X_{21}$ and $X_{22}$ on the basis of selective instruction signals in the respective control circuits C, thereby making it possible to constitute a matrix switcher apparatus of 4 inputs × 4 outputs as a whole without necessitating a centralized control apparatus as in the prior art.

Further, control circuits C are provided in the respective matrix switcher units $M_{11}$ to $M_{22}$ to carry out distributed processing, thereby making it possible to constitute small scale to large scale matrix switcher apparatuses by using the same matrix switcher units. Furthermore, an arrangement is employed to additionally provide a matrix switcher unit in a matrix switcher apparatus once installed to set simple information of an input signal added to the remote control R, thereby making it possible to increase the number of output signals with ease without such a troublesomeness to change a control program of a centralized control unit as encountered with a conventional matrix switcher apparatus. Namely, e.g., the matrix switcher unit is caused to be of structure of 32 inputs × 32 outputs to use a single matrix switcher unit of such a structure, thereby making it possible to constitute a matrix switcher apparatus of 32 inputs × 32 outputs. Further, when, e.g., the above-mentioned matrix switcher units are arranged in the form of a matrix of 16 × 16, a matrix switcher apparatus of 512 inputs × 512 outputs can be constituted without changing the control program. In other words, it is possible to constitute, with ease, a matrix switcher apparatus of M inputs × N outputs including a desired number of input/output terminals by using by using the same matrix switcher units.

It is to be noted that while, in this embodiment, SYNC circuits $S_1$ to $S_4$ are used in order to synchronizations, etc. of respective output signals $O_1$ to $O_4$ outputted from the output terminals 1 to 4 to be in correspondence with each other, e.g., in the case where an input signal delivered to the matrix switcher apparatus is a digital video signal, and that a device connected to the output terminal 11 to 14 is a digital VTR (video tape recorder), etc, an approach may be employed to use the SYNC circuit provided in the digital VTR, etc. and to omit SYNC circuits $S_1$ to $S_4$.

## Claims

1. A matrix switcher apparatus provided with a plurality of matrix switcher units each including a plurality of first input terminals, a plurality of second input terminals, a plurality of first output terminals, and a plurality of second output terminals, said plurality of matrix switcher units being arranged in a matrix form, wherein, between the adjacent matrix switcher units, said plurality of first input terminals and said plurality of first output terminals are connected and said plurality of second input terminals and said plurality of second output terminals are connected, thus to constitute a signal switcher of M inputs × N outputs as a whole,

   characterized in that control means for storing identification information to identify said first input terminals and said second output terminals, and for controlling cross points of said matrix switcher units are provided every said matrix switcher units, and

   that selective instruction signals for signal input and output terminals are delivered to said respective control means, whereby said control means control ON/OFF of said cross points on the basis of said selective instruction signals, respectively.

FIG.1

**FIG.2**

FIG.3

EP 0 451 999 A2

START

ST1

TRANSFER OF THE
CONTROL DATA FROM
REMOTE CONTROL

ST2

OUTPUT
SIGNAL IS
APPLIED ?

NO

YES

ST3

INPUT
SIGNAL IS
APPLIED ?

NO

ST5

YES

ST4

PREDETERMINED
SWITCHING

CASCADE-
CONNECTION

END

# FIG.4